# EUROPEAN PATENT APPLICATION

(11) **EP 3 418 155 A1**
(43) Date of publication of application: **26.12.2018**
(21) Application number: 17782362.2
(22) Date of filing: 10.04.2017
(51) Int. Cl.: B61F 5/10, F16F 9/04, F16F 9/56

(54) **LEVELING VALVE**

(30) Priority: 13.04.2016 JP 2016080521
(71) Applicant: KYB Corporation, Tokyo 105-6111 (JP); Nippon Steel & Sumitomo Metal Corporation, Tokyo 100-8071 (JP)
(72) Inventor: SUZUKI, Tsutomu, Tokyo 105-6111 (JP); ENDO, Yusuke, Tokyo 105-6111 (JP)
(74) Representative: Grünecker Patent- und Rechtsanwälte PartG mbB
(86) International application number: PCT/JP2017/014707
(87) International publication number: WO 2017/179549

(57) **Abstract**

A leveling valve (100) includes: a piston (20) configured to axially move along with the rotation of a lever (4); a stem (50) joined to one axial end portion of the piston (20); a supply/exhaust valve (80) configured to allow for communication between an air spring (3) and a compressor (7) as the stem (50) moves in one direction from a neutral position, and the supply/exhaust valve (80) allowing for communication between the air spring (3) and an exhaust passage (8) as the stem (50) moves in another direction from the neutral position; a guide rod (60) axially joined to another axial end portion of the piston (20); and a guide hole (12c) provided in a first cap member (12), and the guide hole (12c) being configured to support the guide rod (60) in such a manner that the guide rod (60) is slidable.

## Description

### TECHNICAL FIELD

The present invention relates to a leveling valve.

### BACKGROUND ART

JP 2011-949A describes a leveling valve that maintains a position where a railroad vehicle is supported by an air spring of the railroad vehicle at a certain position by supplying the compressed air to the air spring or by discharging the air from the air spring.

In the leveling valve described in JP 2011-949A, when the height at which a vehicle body is supported by the air spring has changed due to a change in the load on the vehicle body, this change causes a lever to swing via a link, and a spool is axially driven via a piston joined to a distal end of the lever. In accordance with such driving of the spool, a first passage connected to a compressor serving as an air pressure supply source or a second passage connected to a drain is selectively connected to an air spring passage connected to the air spring. Furthermore, in this leveling valve, the flow rate characteristics are set using flow resistance of an annular gap that is formed between a large-diameter portion formed at a distal end of the spool and a reduced-diameter portion of a spool hole.

### SUMMARY OF INVENTION

However, in the leveling valve described in JP 2011-949A, the spool is supported by the piston at one side. Therefore, if a moment acts on the piston due to swinging of the lever, the piston will be inclined. If the piston is inclined, the spool joined to the piston will be inclined with respect to a fulcrum served by a ring seal that is provided on a sliding contact portion of the spool hole, and the distal end of the spool will come into contact with the spool hole. If the spool operates in such a state where its distal end and the spool hole are in contact with each other, there is a possibility that the flow rate characteristics change due to abrasion of the spool.

The present invention has been conceived in view of the foregoing problem, and aims to provide a leveling valve that can prevent the inclination of a piston.

According to one aspect of the present invention, a leveling valve for adjusting a height of an air spring by causing the air spring to selectively communicate with a compressed air source or an exhaust passage depending on a rotational direction of a lever, the air spring being provided between a truck and a vehicle body of a railroad vehicle, the lever rotating in accordance with a relative displacement of the vehicle body with respect to the truck, the leveling valve includes: a piston housed inside a housing hole formed in a housing, the piston being configured to axially move along with the rotation of the lever; a stem joined to one axial end portion of the piston; a supply/exhaust valve configured to allow for communication between the air spring and the compressed air source as the stem moves in one direction from a neutral position, the supply/exhaust valve allowing for communication between the air spring and the exhaust passage as the stem moves in another direction from the neutral position; a guide rod axially joined to another axial end portion of the piston; and a guide hole provided in the housing, the guide hole being configured to support the guide rod in such a manner that the guide rod is slidable.

### BRIEF DESCRIPTION OF DRAWINGS

FIG. 1 is an assembly diagram of a leveling valve according to an embodiment of the present invention.
FIG. 2 is a cross-sectional view of the leveling valve according to the embodiment of the present invention taken along an axial direction.
FIG. 3 is a cross-sectional view of the leveling valve according to the embodiment of the present invention taken along a radial direction.
FIG. 4 is an enlarged view of a ring member included in the leveling valve according to the embodiment of the present invention.

### DESCRIPTION OF EMBODIMENTS

The following describes an embodiment of the present invention with reference to the drawings.

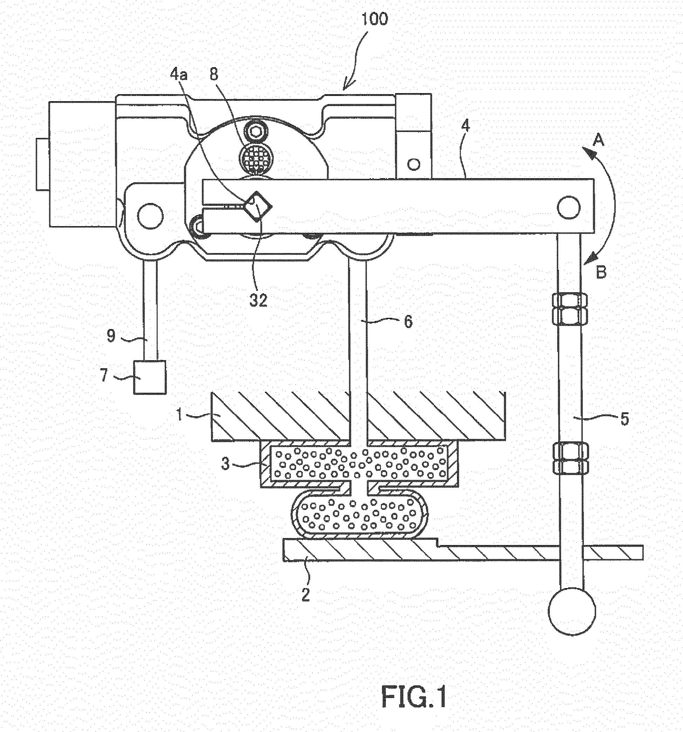

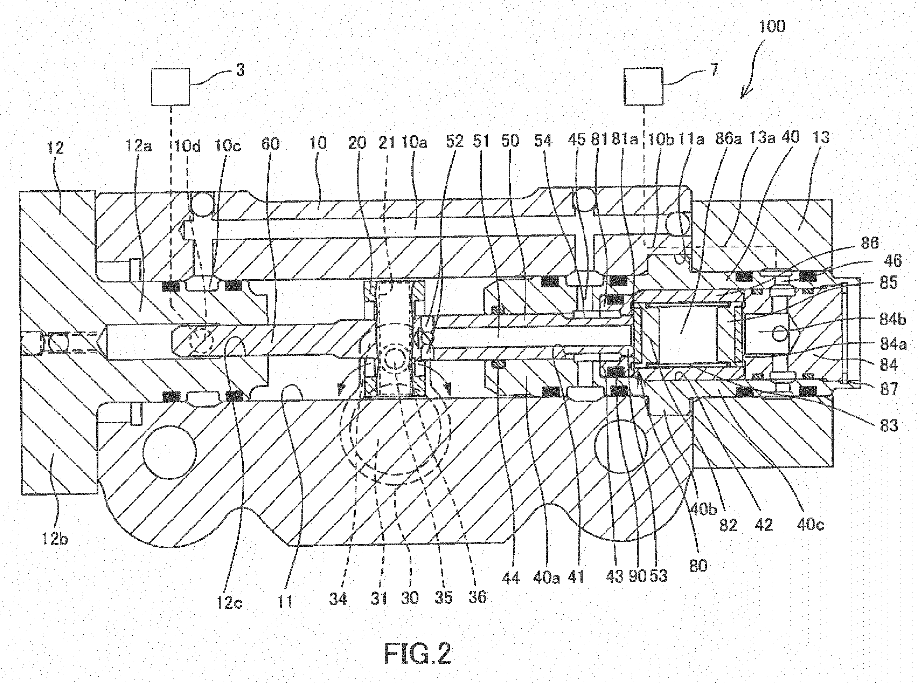

A description is now given of a leveling valve 100 according to a first embodiment of the present invention. First, an overview of the leveling valve 100 will be described with reference to FIGs. 1 and 2.

The leveling valve 100 has a function of adjusting the height of an air spring provided between a vehicle body and a truck of a railroad vehicle so as to maintain the vehicle body at a certain height.

As shown in FIG. 1, the leveling valve 100 is mounted in such a manner that it extends across the vehicle body 1 and the truck 2. Specifically, the leveling valve 100 is attached to the vehicle body 1, and is joined to the truck 2 via a lever 4 and a joint rod 5. When the height of the vehicle body 1 changes due to expansion and compression of the air spring 3 caused by a change in the load on the vehicle body 1, this change is transmitted to the leveling valve 100 via the joint rod 5 and the lever 4.

When the air spring 3 is compressed due to an increase in the load on the vehicle body, the lever 4 is pushed upward from a neutral position (rotation in the direction of arrow A in FIG. 1). Consequently, a later-described air supply valve 80A is opened due to the movement of a piston 20 of the leveling valve 100 (see FIG. 2), and an air spring passage 6 communicating with the air spring 3 communicates with a supply passage 9 communicating with a compressor 7 that serves as a compressed air source. In this way, compressed air from the compressor 7 is supplied to the air spring 3. Once the air spring 3 reverts to a certain height, the lever 4 returns to the neutral position, the air supply valve 80A of the leveling valve 100 is closed, and the supply of the compressed air is blocked.

On the other hand, when the air spring 3 has expanded due to a decrease in the load on the vehicle body, the lever 4 is pulled downward from the neutral position (rotation in the direction of arrow B in FIG. 1). Consequently, a later-described exhaust valve 80B of the leveling valve 100 is opened, and the air spring passage 6 communicates with an exhaust passage 8. As the exhaust passage 8 communicates with the ambient air, the compressed air in the air spring 3 is discharged to the ambient air. Once the air spring 3 reverts to a certain height, the lever 4 returns to the neutral position, the exhaust valve 80B of the leveling valve 100 is closed, and the discharge of the compressed air is blocked.

In this way, the leveling valve 100 causes the air spring 3 to selectively communicate with the compressor 7 or the exhaust passage 8 depending on the rotational direction of the lever 4 that rotates in accordance with a relative displacement of the vehicle body 1 with respect to the truck 2. The relative displacement between the vehicle body 1 and the truck 2 is automatically adjusted to maintain the vehicle body 1 at a certain height.

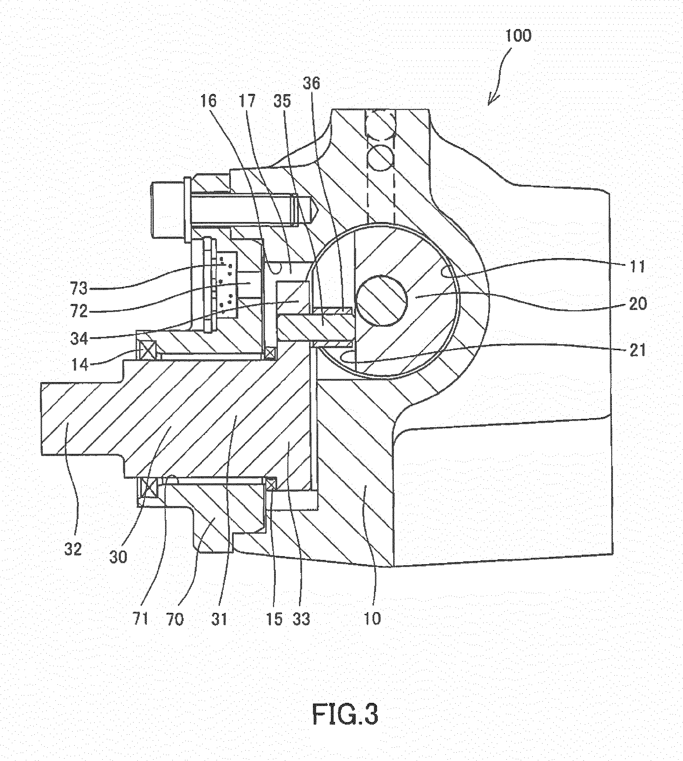

Next, a specific configuration of the leveling valve 100 will be described with reference to FIGs. 2 and 3. FIG. 2 is a cross-sectional view of the leveling valve 100 taken along an axial direction. FIG. 3 is a cross-sectional view of the leveling valve 100 taken along a radial direction.

The leveling valve 100 includes a case 10, a first cap member 12, a second cap member 13, and a tubular valve case 40. The case 10 is fixed to the vehicle body 1, and has a housing hole 11 that is formed so as to penetrate the interior of the case 10. The first cap member 12 is attached to one side surface of the case 10, and closes one opening of the housing hole 11. The second cap member 13 is attached to the other side surface of the case 10. The valve case 40 closes the other opening of the housing hole 11.

The first cap member 12 includes a columnar insertion portion 12a that is inserted into the housing hole 11, and a flange portion 12b that is formed continuously with the insertion portion 12a and has a larger diameter than the insertion portion 12a. A non-illustrated bolt is inserted through a through hole (not illustrated) provided in the flange portion 12b, and fastened to a bolt hole formed in the case 10. As a result, the first cap member 12 is attached to the case 10.

A male thread portion 40b is formed on a part of an outer circumferential surface of the valve case 40. The valve case 40 includes a first tubular portion 40a and a second tubular portion 40c, and the male thread portion 40b serves as a boundary between these tubular portions. The first tubular portion 40a and the male thread portion 40b are inserted inside the housing hole 11. The male thread portion 40b is screwed with a female thread portion 11a that is formed in the vicinity of an opening portion of the housing hole 11. As a result, the valve case 40 is fixed to the case 10.

The second cap member 13 is fixed to the case 10 in such a manner that it covers an outer circumferential surface of the second tubular portion 40c of the valve case 40, and that it covers a side surface of the male thread portion 40b on the second tubular portion 40c side. This prevents the valve case 40 from falling off the case 10. A flow passage 13a is formed in the second cap member 13. The flow passage 13a connects between a flow passage 10b formed in the case 10 and a through hole 46 that connects between the interior and the exterior of the valve case 40.

As shown in FIG. 3, a recess portion 16 that opens in the radial direction with respect to the housing hole 11 is formed in the case 10. The recess portion 16 is formed so as to be connected to the housing hole 11.

The leveling valve 100 further includes a cover member 70 that is attached to the case 10 so as to cover the recess portion 16. Attaching the cover member 70 to the case 10 forms a housing space 17 that houses a later-described rotor 30.

A communication hole 72 that allows for communication between the housing space 17 and the outside is formed in the cover member 70. The communication hole 72 is provided with a filter 73 for preventing the entrance of foreign substances from the outside.

The case 10, the first cap member 12, the second cap member 13, the cover member 70, and the valve case 40 compose a housing of the leveling valve 100.

As shown in FIGs. 2 and 3, the leveling valve 100 further includes the piston 20, the rotor 30, a stem 50, a guide rod 60, and a supply/exhaust valve 80. The piston 20 is housed in the housing hole 11 of the case 10, and axially moves along with the rotation of the lever 4. The rotor 30 is intended to transmit the rotation of the lever 4 to the piston 20. The stem 50 is joined to one axial end portion (end surface) of the piston 20. The guide rod 60 is axially joined to the other axial end portion (end surface) of the piston 20. The supply/exhaust valve 80 allows for communication between the air spring 3 and the compressor 7 as the stem 50 moves in one direction from a neutral position, and allows for communication between the air spring 3 and the exhaust passage 8 as the stem 50 moves in the other direction from the neutral position.

The piston 20 is supported by the stem 50 and the guide rod 60 so as to be movable inside the housing hole 11 of the case 10. A gap is provided between an outer circumferential surface of the piston 20 and an inner circumferential surface of the housing hole 11. Therefore, the outer circumferential surface of the piston 20 does not slide on the inner circumferential surface of the housing hole 11. That is, frictional resistance does not occur therebetween. As shown in FIG. 3, a groove 21 having a semilunar cross-section is formed on a part of the outer circumferential surface of the piston 20.

As shown in FIG. 3, the rotor 30 is rotatably supported by a support hole 71 formed in the cover member 70 via bearings 14, 15. The rotor 30 includes a tubular main body portion 31, a boss portion 32 having a shape of a quadrilateral prism, a flange portion 33, and an arm portion 34. The main body portion 31 is supported by the bearings 14, 15. The boss portion 32 is formed so as to project from one end portion of the main body portion 31, and the width across two opposing surfaces thereof is smaller than the outer diameter of the main body portion 31. The flange portion 33 is provided on the other end portion of the main body portion 31. The arm portion 34 is formed so as to project radially outward from an outer circumferential surface of the flange portion 33. The boss portion 32 is fit into a fitting hole 4a formed in the lever 4 (see FIG. 1). As shown in FIGs. 2 and 3, a pin 35 is press-fit into the arm portion 34. The pin 35 is inserted inside a sleeve 36, and is movably inserted inside the groove 21 of the piston 20 together with the sleeve 36. In this way, when the boss portion 32 rotates along with the rotation of the lever 4, the pin 35 that is press-fit into the arm portion 34 rotates in the directions of arrows shown in FIG. 2. As the pin 35 is inserted inside the groove 21 of the piston 20, the piston 20 axially moves inside the housing hole 11 along with the rotation of the pin 35.

As shown in FIG. 2, the stem 50 is formed in a shape of a bottomed tube extending in a moving direction of the piston 20 (an axial direction of the housing hole 11). The stem 50 has an axial hole 51 that extends in the axial direction. A plurality of radial through holes 52 that allow for communication between the axial hole 51 and the housing hole 11 are provided at the proximal end side (the bottom portion side) of the stem 50. The axial hole 51 communicates with the outside via the through holes 52, the housing hole 11, the housing space 17, and the communication hole 72. The axial hole 51, the through holes 52, the housing hole 11, the housing space 17, and the communication hole 72 compose the exhaust passage 8. An annular groove 54 is formed on an outer circumferential surface of the stem 50. A valve portion 53 is formed at the distal end side of the stem 50 so as to be adjacent to the annular groove 54. The valve portion 53 has a smaller diameter than the proximal end side of the stem 50, and has a larger diameter than the annular groove 54. The valve portion 53 will be described later in detail.

The guide rod 60 is formed in a shape of a column that extends in the moving direction (the axial direction) of the piston 20, and is joined to the piston 20 so as to be coaxial with the stem 50. The guide rod 60 is slidably supported by a guide hole 12c formed in the insertion portion 12a of the first cap member 12.

The leveling valve 100 further includes an annular ring member 81 that is arranged so as to oppose an outer circumference of a distal end of the stem 50 and that is radially movable. A valve seat portion 81a is formed on one end surface of the ring member 81. The ring member 81 is disposed inside the valve case 40.

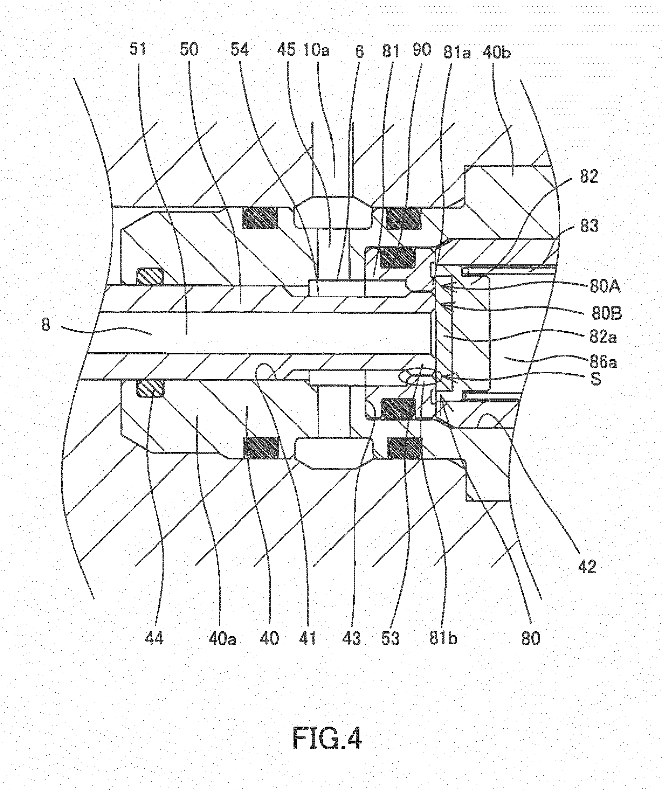

The valve case 40 and the internal structure of the valve case 40 will now be described with reference to FIGs. 2 and 4.

The valve case 40 has a first through hole 41 into which the distal end side of the stem 50 is inserted, a second through hole 42 that is formed so as to have a larger diameter than the first through hole 41, and a step portion 43 that forms a boundary between the first through hole 41 and the second through hole 42.

An O-ring 44 that forms a seal between an inner circumferential surface of the first through hole 41 and the outer circumferential surface of the stem 50 is provided in the vicinity of a distal end portion of the first through hole 41 on the piston 20 side.

The ring member 81, a tubular collar member 86 having an internal space 86a, and a plug 84 that closes an opening portion of the second through hole 42 are provided inside the second through hole 42. The plug 84 is locked by a stop ring 87, which is fit inside the second through hole 42, so as to push the ring member 81 against the step portion 43 via the collar member 86.

A valve body 82, a spring 83, and a check valve body 85 are placed in the internal space 86a of the collar member 86. The valve body 82 is separated from and seated on the valve seat portion 81a of the ring member 81. The spring 83 pushes the valve body 82 toward the valve seat portion 81a. The check valve body 85 is separated from and seated on a valve seat portion 84a formed on the plug 84, and is pushed by the spring 83 toward the valve seat portion 84a.

A gap, as well as an O-ring 90 for preventing leakage of the compressed air from the gap, is provided between an outer circumferential surface of the ring member 81 and an inner circumferential surface of the second through hole 42. As this O-ring 90 is elastic, the ring member 81 is radially movable inside the second through hole 42.

As shown in FIG. 4, the ring member 81 includes the valve seat portion 81a that is formed on one end surface thereof, and an annular projection portion 81b that is formed so as to project radially inward from an inner circumferential surface of one end side of the ring member 81. At a distal end portion of the stem 50, a gap between an inner circumferential surface of the projection portion 81b and an outer circumferential surface of the valve portion 53 of the stem 50 forms a minute annular gap S that narrows the flow of the compressed air associated with opening and closing of the supply/exhaust valve 80 (see FIG. 4). The annular gap S communicates with the air spring 3 via the annular groove 54, a through hole 45 formed in the valve case 40, a passage 10a formed in the case 10, an annular flow passage 10c formed between an inner circumferential surface of the case 10 and the insertion portion 12a of the first cap member 12, and a through flow passage 10d that is formed in the case 10 and connected to the annular flow passage 10c. The annular gap S, the annular groove 54, the through hole 45, the passage 10a, the annular flow passage 10c, and the through flow passage 10d compose the air spring passage 6.

As shown in FIG. 2, a flow passage 84b is formed inside the plug 84. The flow passage 84b communicates with the compressor 7 via the through hole 46 of the valve case 40, the flow passage 13a of the second cap member 13, and the flow passage 10b of the case 10.

The check valve body 85 is separated from and seated on the valve seat portion 84a of the plug 84. When the pressure at the compressor 7 side (the flow passage 84b) is higher than the pressure at the downstream side of the check valve body 85 (the internal space 86a), the check valve body 85 is separated from the valve seat portion 84a against a pushing force of the spring 83. Conversely, when the pressure at the compressor 7 side (the flow passage 84b) is lower than the pressure at the downstream side of the check valve body 85 (the internal space 86a), the check valve body 85 is seated on the valve seat portion 84a. The internal space 86a, the flow passage 84b, the through hole 46, the flow passage 13a, and the flow passage 10b compose the supply passage 9 in the leveling valve 100.

The supply/exhaust valve 80 is provided inside the valve case 40. The supply/exhaust valve 80 includes the air supply valve 80A that controls communication or blockage between the supply passage 9 and the air spring passage 6, and the exhaust valve 80B that controls communication or blockage between the air spring passage 6 and the exhaust passage 8. The specifics will be described below.

The valve body 82 includes an elastic seat portion 82a. The seat portion 82a is separated from and seated on the valve seat portion 81a of the ring member 81. When the seat portion 82a of the valve body 82 is seated on the valve seat portion 81a of the ring member 81, communication between the supply passage 9 and the air spring passage 6 is blocked. On the other hand, when the seat portion 82a of the valve body 82 is separated from the valve seat portion 81a of the ring member 81, the supply passage 9 and the air spring passage 6 communicate with each other. As such, the seat portion 82a of the valve body 82 and the valve seat portion 81a of the ring member 81 compose the air supply valve 80A that controls the supply of air to the air spring 3.

The valve portion 53 of the stem 50 is separated from and seated on the seat portion 82a of the valve body 82. When the valve portion 53 of the stem 50 is seated on the seat portion 82a of the valve body 82, communication between the air spring passage 6 and the exhaust passage 8 is blocked. On the other hand, when the valve portion 53 of the stem 50 is separated from the seat portion 82a of the valve body 82, the air spring passage 6 and the exhaust passage 8 communicate with each other. As such, the valve portion 53 of the stem 50 and the seat portion 82a of the valve body 82 compose the exhaust valve 80B that controls the discharge of air from the air spring 3.

A description is now given of the operations of the leveling valve 100 configured in the foregoing manner.

As stated earlier, when the air spring 3 is compressed due to an increase in the load on the vehicle body, the lever 4 is pushed upward from the neutral position (rotation in the direction of arrow A in FIG. 1). Consequently, the rotor 30 joined to the lever 4 rotates in the rightward direction in FIG. 2, and thus the pin 35 provided on the arm portion 34 of the rotor 30 rotates about the main body portion 31 in the rightward direction. The pin 35 rotates in the rightward direction while moving inside the groove 21 of the piston 20 in the downward direction in FIG. 2. As a result, the piston 20 moves in the rightward direction in FIG. 2. Accordingly, the stem 50 joined to the piston 20 pushes the valve body 82 against the pushing force of the spring 83, thereby separating the valve body 82 from the valve seat portion 81a of the ring member 81. Consequently, the supply passage 9 and the air spring passage 6 communicate with each other. Specifically, the compressed air discharged from the compressor 7 is supplied to the air spring 3 via a route composed of the flow passage 10b, the flow passage 13a, the through hole 46, the flow passage 84b, the internal space 86a, the annular gap S, the annular groove 54, the through hole 45, the passage 10a, the annular flow passage 10c, and the through flow passage 10d.

At this time, as the valve portion 53 of the stem 50 is pressed against the seat portion 82a of the valve body 82, the axial hole 51 and the annular gap S are maintained in a state where they are blocked from each other. That is, when the piston 20 moves in the rightward direction from a neutral position, the air supply valve 80A is opened, the supply passage 9 and the air spring passage 6 communicate with each other, the exhaust valve 80B is closed, and the exhaust passage 8 and the air spring passage 6 are blocked from each other.

When the supply passage 9 and the air spring passage 6 communicate with each other, the compressed air from the compressor 7 is supplied to the air spring 3 via the supply passage 9 and the air spring passage 6, thereby increasing the height of the air spring 3. As a result, the height of the vehicle body 1 is increased, and the lever 4 accordingly approaches the neutral position. As the lever 4 approaches the neutral position, the piston 20 and the stem 50 also move in the leftward direction in FIG. 1. When the height of the vehicle body 1 eventually reverts to a prescribed position, the lever 4 reverts to the neutral position, and the seat portion 82a of the valve body 82 is seated on the valve seat portion 81a of the ring member 81. That is, the air supply valve 80A of the leveling valve 100 is closed. Consequently, communication between the supply passage 9 and the air spring passage 6 is blocked, and the supply of the compressed air to the air spring 3 is blocked.

On the other hand, when the air spring 3 has expanded due to a decrease in the load on the vehicle body, the lever 4 is pushed downward from the neutral position (rotation in the direction of arrow B in FIG. 1). Consequently, the rotor 30 joined to the lever 4 rotates in the leftward direction in FIG. 2, and thus the pin 35 provided on the arm portion 34 of the rotor 30 rotates about the main body portion 31 in the leftward direction. The pin 35 rotates in the leftward direction while moving inside the groove 21 of the piston 20 in the downward direction in FIG. 2. As a result, the piston 20 moves in the leftward direction in FIG. 2, and the stem 50 moves in the leftward direction together with the piston 20. Accordingly, the valve portion 53 of the stem 50 is separated from the seat portion 82a of the valve body 82. Consequently, the air spring passage 6 and the exhaust passage 8 communicate with each other. Specifically, the compressed air inside the air spring 3 is discharged to the ambient air via a route composed of the through flow passage 10d, the annular flow passage 10c, the passage 10a, the through hole 45, the annular groove 54, the annular gap S, the axial hole 51, the through holes 52, the housing hole 11, the housing space 17, and the communication hole 72.

At this time, as the seat portion 82a of the valve body 82 is pressed against the valve seat portion 81a of the ring member 81 by the pushing force of the spring 83, the internal space 86a of the collar member 86 and the annular gap S are in a state where they are blocked from each other. That is, when the piston 20 moves in the leftward direction from the neutral position, the exhaust valve 80B is opened, the air spring passage 6 and the exhaust passage 8 communicate with each other, the air supply valve 80A is closed, and the supply passage 9 and the air spring passage 6 are blocked from each other.

When the air spring passage 6 and the exhaust passage 8 communicate with each other, the compressed air from the air spring 3 is discharged to the ambient air via the air spring passage 6 and the exhaust passage 8, thereby reducing the height of the air spring 3. As a result, the height of the vehicle body 1 is reduced, and the lever 4 accordingly approaches the neutral position. As the lever 4 approaches the neutral position, the piston 20 and the stem 50 also move in the rightward direction in FIG. 1. When the height of the vehicle body 1 eventually reverts to the prescribed position, the lever 4 reverts to the neutral position, and the valve portion 53 of the stem 50 is seated on the seat portion 82a of the valve body 82. That is, the exhaust valve 80B of the leveling valve 100 is closed. Consequently, communication between the air spring passage 6 and the exhaust passage 8 is blocked, and the discharge of the compressed air from the air spring 3 is blocked.

In the foregoing manner, the leveling valve 100 adjusts the height of the air spring 3 by causing the air spring 3 to selectively communicate with the compressor 7 or the ambient air depending on the rotational direction of the lever 4 that rotates in accordance with a relative displacement of the vehicle body 1 with respect to the truck 2.

A description is now given of the functions of the guide rod 60.

In the leveling valve 100, a rotational motion of the arm portion 34 (the pin 35) of the rotor 30 joined to the lever 4 is converted into a linear motion of the piston 20. As shown in FIG. 2, the pin 35 that is press-fit into the arm portion 34 is not aligned with a central axis line of the piston 20 and the stem 50. Even if the pin 35 is located on the central axis line of the piston 20 and the stem 50 when the lever 4 is at the neutral position, a force that acts on the piston 20 from the pin 35 becomes out of alignment with the central axis line of the piston 20 and the stem 50 because the pin 35 exerts a rotational motion about the main body portion 31 of the rotor 30. For this reason, along with the rotation of the lever 4, a moment acts on the piston 20 and the stem 50 from the pin 35. Such acting of the moment makes the stem 50 inclined with respect to a fulcrum served by the O-ring 44 provided on the valve case 40. Accordingly, an outer circumference of the valve portion 53 located at the distal end of the stem 50 comes into contact with the inner circumferential surface of the projection portion 81b of the ring member 81. If the valve portion 53 operates while remaining in contact with the inner circumferential surface of the projection portion 81b, there is a possibility that the area of a cross-section of the annular gap S changes due to abrasion of the valve portion 53.

In view of this, the leveling valve 100 includes the guide rod 60 that is provided at the other axial end portion of the piston 20 and that extends in the axial direction. Furthermore, the guide rod 60 is slidably supported by the guide hole 12c formed in the first cap member 12. Therefore, even if a moment acts on the piston 20 along with the rotation of the lever 4, the inclination of the piston 20 and the stem 50 can be prevented.

A description is now given of the functions of the annular gap S.

For example, when the railroad vehicle is running, the height of the vehicle body 1 changes at frequent intervals due to vibration and the like. If the height of the air spring 3 consequently changes at frequent intervals, the ride quality will degrade. For this reason, the annular gap S is provided in the leveling valve 100. In this way, when the amount of change in the height of the vehicle body 1 is small, that is, when the amount of change in the stem 50 is small, the presence of the annular gap S restricts the flow rate of the supply to the air spring passage 6 or the flow rate of the discharge from the air spring passage 6, even if the air supply valve 80A or the exhaust valve 80B is opened. This prevents the height of the air spring 3 from conforming to the frequent change in the height of the vehicle body 1. As a result, degrading of the ride quality can be prevented. Although the annular gap S is provided, the annular gap S disappears and the compressed air is allowed to flow at a large flow rate when the stem 50 moves to a position that brings the valve portion 53 and the projection portion 81b out of alignment with each other in the axial direction.

The foregoing embodiment achieves the following advantageous effects.

The leveling valve 100 includes the guide rod 60 that is joined to the other axial end portion of the piston 20 and that slides in the guide hole 12c provided in the first cap member 12. In this way, even if a moment acts on the piston 20 due to the rotation of the lever 4, the guide rod 60, which is provided so as to be coaxial with the stem 50, is slidably supported by the guide hole 12c, thereby preventing the inclination of the piston 20 and the stem 50. This can prevent the outer circumference of the valve portion 53 of the stem 50 from getting abraded by coming into contact with the inner circumferential surface of the projection portion 81b of the ring member 81.

In a conventional leveling valve that does not include the guide rod 60, the inclination of the stem 50 is restrained by causing the piston 20 to slide in the housing hole 11. In contrast, in the leveling valve 100 according to the present embodiment, the piston 20 is supported by the guide rod 60 and the stem 50, and a gap is provided between the outer circumferential surface of the piston 20 and the inner circumferential surface of the housing hole 11. Therefore, the inclination of the stem 50 can be restrained by the guide rod 60 even without causing the piston 20 to slide in the housing hole 11. Furthermore, as the piston 20 does not come into contact with the housing hole 11, sliding resistance by the piston 20 can be reduced, and the responsiveness of the leveling valve 100 is improved. Moreover, as the piston 20 does not come into contact with the housing hole 11, there is no abrasion between the piston 20 and the housing hole 11. As a result, the durability of the piston 20 and the case 10 is improved.

The leveling valve 100 includes the ring member 81 that is arranged so as to oppose the outer circumference of the distal end of the stem 50 and that is radially movable. The center of the ring member 81 is defined by the O-ring 90, and the ring member 81 is supported in a radially movable manner. Thus, even if the outer circumference of the valve portion 53 of the stem 50 comes into contact with the ring member 81 due to the moment-caused inclination of the piston 20, the radial movement of the ring member 81 can reduce the load acting on the distal end of the stem 50. Accordingly, abrasion of the distal end of the stem 50 can be prevented.

Although the ring member 81 is provided with the valve seat portion 81a in the leveling valve 100, the step portion 43 of the valve case 40 may be provided with a valve seat instead of providing the ring member 81. In this case, the annular gap S is provided between the valve case 40 and the stem 50.

Below is a comprehensive description of the configurations, functions, and advantageous effects of the embodiment of the present invention configured in the foregoing manner.

The leveling valve 100 includes: the piston 20 that is housed inside the housing hole 11 formed inside the housing (the case 10) and that axially moves along with the rotation of the lever 4; the stem 50 joined to one axial end portion of the piston 20; the supply/exhaust valve 80 that allows for communication between the air spring 3 and the compressed air source (the compressor 7) as the stem 50 moves in one direction from the neutral position, and allows for communication between the air spring 3 and the exhaust passage 8 as the stem 50 moves in another direction from the neutral position; the guide rod 60 axially joined to another axial end portion of the piston 20; and the guide hole 12c that is provided in the housing (the first cap member 12) and that supports the guide rod 60 in such a manner that the guide rod 60 is slidable.

According to this configuration, even if a moment acts on the piston 20 due to the rotation of the lever 4, the guide rod 60, which is provided in the same direction as the stem 50, is slidably supported by the guide hole 12c, thereby preventing the inclination of the piston 20.

The leveling valve 100 further includes the annular ring member 81 that is arranged so as to oppose the outer circumference of the distal end of the stem 50 and that is radially movable.

According to this configuration, even if the outer circumference of the distal end of the stem 50 comes into contact with the ring member 81 due to the inclination of the piston 20, abrasion of the distal end of the stem 50 can be prevented because the ring member 81 is radially movable.

Furthermore, in the leveling valve 100, the annular gap S that narrows the flow of the compressed air associated with opening and closing of the supply/exhaust valve 80 is formed at the outer circumference of the distal end of the stem 50.

According to this configuration, the annular gap S can restrict the flow of the compressed air that is supplied to and discharged from the air spring 3.

Furthermore, in the leveling valve 100, the piston 20 is supported by the stem 50 and the guide rod 60 in such a manner that the piston 20 is movable inside the housing (the case 10), and a gap is provided between the outer circumferential surface of the piston 20 and the inner circumferential surface of the housing hole 11 of the housing (the case 10).

According to this configuration, as the piston 20 does not come into contact with the housing hole 11 of the housing (the case 10), sliding resistance between the piston 20 and the housing (the case 10) can be reduced. As a result, the responsiveness of the leveling valve 100 is improved. Furthermore, as the piston 20 does not come into contact with the housing hole 11 of the housing (the case 10), there is no abrasion between the piston 20 and the housing (the case 10). As a result, the durability of the piston 20 and the housing (the case 10) is improved.

Embodiments of this invention were described above, but the above embodiments are merely examples of applications of this invention, and the technical scope of this invention is not limited to the specific constitutions of the above embodiments.

Note that the guide rod 60 need not be coaxial with the stem 50 as long as it extends in the moving direction of the piston 20. Furthermore, the second cap member 13 and the valve case 40 may be integrally formed, and the case 10 and the valve case 40 may be integrally formed.

The piston 20 may be configured to slide in the housing hole 11. In this case, the piston 20 itself can prevent the inclination of the piston 20.

This application claims priority based on Japanese Patent Application No.2016-80521 filed with the Japan Patent Office on April 13, 2016, the entire contents of which are incorporated into this specification.

## Claims

1. A leveling valve for adjusting a height of an air spring by causing the air spring to selectively communicate with a compressed air source or an exhaust passage depending on a rotational direction of a lever, the air spring being provided between a truck and a vehicle body of a railroad vehicle, the lever rotating in accordance with a relative displacement of the vehicle body with respect to the truck, the leveling valve comprising:
a piston housed inside a housing hole formed in a housing, the piston being configured to axially move along with the rotation of the lever;
a stem joined to one axial end portion of the piston;
a supply/exhaust valve configured to allow for communication between the air spring and the compressed air source as the stem moves in one direction from a neutral position, the supply/exhaust valve allowing for communication between the air spring and the exhaust passage as the stem moves in another direction from the neutral position;
a guide rod axially joined to another axial end portion of the piston; and
a guide hole provided in the housing, the guide hole being configured to support the guide rod in such a manner that the guide rod is slidable.

2. The leveling valve according to claim 1, further comprising
an annular ring member arranged so as to oppose an outer circumference of a distal end of the stem, the annular ring member being configured to be radially movable.

3. The leveling valve according to claim 1,
wherein
an annular gap configured to narrow a flow of compressed air associated with opening and closing of the supply/exhaust valve is formed at an outer circumference of a distal end of the stem.

4. The leveling valve according to claim 1,
wherein
the piston is supported by the stem and the guide rod in such a manner that the piston is movable inside the housing, and a gap is provided between an outer circumferential surface of the piston and an inner circumferential surface of the housing hole of the housing.
